# EUROPÄISCHE PATENTSCHRIFT

(11) **EP 3 187 362 B1**
(45) Veröffentlichungstag und Bekanntmachung des Hinweises auf die Patenterteilung: **06.05.2020**
(21) Anmeldenummer: 16195324.5
(22) Anmeldetag: 24.10.2016
(51) Int. Cl.: H02J 7/02, B60L 5/00, H02J 7/00, H02J 5/00, B60L 53/12, B60M 7/00, H02J 50/10, H02J 50/40, B60L 53/39, B60L 53/30, H02J 50/90

(54) **BATTERIELADEVORRICHTUNG FÜR FLURFÖRDERZEUG**
BATTERY LOADING DEVICE FOR INDUSTRIAL TRUCK
CHARGEUR DE BATTERIE POUR CHARIOT DE MANUTENTION

(30) Priorität: 29.12.2015 DE 102015122905; 14.10.2016 DE 102016119677
(43) Veröffentlichungstag der Anmeldung: 05.07.2017
(73) Patentinhaber: STILL GmbH, 22113 Hamburg (DE)
(72) Erfinder: Haake, Kai, 21073 Hamburg (DE)
(74) Vertreter: Patentship Patentanwaltsgesellschaft mbH

(56) Entgegenhaltungen:
- US-A1- 2009 045 773
- US-A1- 2012 119 575
- US-A1- 2012 256 586
- US-A1- 2015 298 559

## Beschreibung

Die Erfindung betrifft eine Batterieladevorrichtung für ein Flurförderzeug. Insbesondere betrifft die Erfindung eine Batterieladevorrichtung für das induktive Laden einer Traktionsbatterie eines Flurförderzeugs mit einer Primärspule, die in einer von einem Flurförderzeug überfahrbaren Bodenfläche eingelassen ist, wobei die Primärspule aus einem oder mehreren, nebeneinander angeordneten Modulen mit jeweiligen Modulspulen aufgebaut ist, und die Primärspule elektrische Leistung an eine Sekundärspule des Flurförderzeugs übertragen kann, wobei jedes Modul für den Betrieb in Bezug auf ein festgelegtes benachbartes Modul sowohl auf einen Betrieb als Verbundmodul als auch auf einen Betrieb als Fahrwegmodul eingestellt werden kann, wobei im Betrieb als Verbundmodul die Modulspule mit dem benachbarten Modul synchron betrieben wird.

Bei Flurförderzeugen ist es üblich und Stand der Technik, dass Traktionsbatterien entweder bei einem Mehrschichtbetrieb zum Laden aus einem Batteriefach entnommen und gegen eine aufgeladene Traktionsbatterie ausgewechselt werden, oder der Fahrer gegen Ende seiner Arbeitsschicht ein Ladegerät über eine Steckerverbindung mit der Traktionsbatterie verbindet, um diese während der Arbeitspause aufzuladen. Typischerweise erfolgt dies pro Arbeitsschicht einmal, da eine Traktionsbatterie eines batterieelektrischen Flurförderzeugs im Regelfall so bemessen wird, dass mit einer Ladung der Traktionsbatterie eine komplette Arbeitsschicht gefahren und gearbeitet werden kann.

Überdies ist es bei Blei-Säurebatterie anzustreben, diese mindestens bis zu einem gewissen Maß zu entladen, bevor ein Wiederaufladen erfolgt, da die Technologie dieser Batterien nicht für ein Zwischenladen geeignet ist und sich beispielsweise unerwünschte Memory-Effekte einstellen können.

Durch neuere Technologien können inzwischen Batterien bzw. Akkumulatoren hergestellt werden und auch im industriellen Einsatz verwendet werden, die bessere Leistungsdaten bieten. Solche Batterien kann man als Hochleistungsbatterien bezeichnen, die sich dadurch auszeichnen, dass sie gegenüber einem Blei-Säureakkumulator eine höhere Energiedichte in Bezug auf Gewicht und/oder Volumen aufweisen und eine andere Technik als eine Blei-Säure Reaktion für die Energiespeicherung nutzen. Hinzu kommt bei vielen Hochleistungsbatterien als Merkmal, dass eine hohe Leistung beim Entladen abgegeben werden kann und/oder mit großer Leistung geladen werden kann. Die typischen Energiedichten in Bezug auf Gewicht und/oder Volumen liegen bei einer Hochleistungsbatterie dabei mindestens für einen der beiden Werte oberhalb und außerhalb der entsprechenden Kenngrößen für Blei-Säurebatterien.

Zunehmend in größerem Umfang eingesetzt werden als Beispiel solcher Hochleistungsbatterien Lithium-Ionenbatterien, die sich durch hohe Energiedichte auszeichnen und nur einem geringen Memoryeffekt unterliegen sowie ein Entladen der Batterie bzw. Aufladen der Batterie mit großer Leistung ermöglichen.

Besonders vorteilhaft ist der Einsatz solcher Hochleistungsbatterien bei Fahrzeugen und beispielsweise bei Flurförderzeugen, da aufgrund der hohen Energiedichte in Bezug auf das Volumen bei dem vorgegebenen Bauraum für die Traktionsbatterie eine größere Menge elektrische Energie gespeichert werden kann und somit die Reichweite eines Fahrzeugs bzw. die Einsatzdauer des Flurförderzeugs vergrößert werden kann. Insbesondere ist es jedoch möglich, solche Hochleistungsbatterie und vor allem Lithium-Ionenbatterien zwischenzuladen und somit kurze Arbeitspausen oder sonstige Möglichkeiten zum Wiederaufladen der Traktionsbatterie zu nutzen. Durch ein Zwischenladen wird es auch möglich, eine kleinere Kapazität für die Traktionsbatterie zu wählen und dadurch Kosten einzusparen.

Für das Laden von Traktionsbatterien von Elektrofahrzeugen ist es bekannt, ein induktives Ladungssystem einzusetzen, bei dem eine Ladeeinheit über eine Primärspule mit einer Sekundärspule des Fahrzeugs induktiv koppelt und elektrische Leistung überträgt, die beispielsweise dazu dient, die Traktionsbatterie des Elektrofahrzeugs aufzuladen. Eine optimale Leistungsübertragung ist dann möglich, wenn die Primärspule und die Sekundärspule möglichst parallel ausgerichtet sind und einen möglichst kleinen Abstand aufweisen. Das Laden kann während des Stillstands des Elektrofahrzeugs an einer Ladestation geschehen, aber auch beispielsweise während der Fahrt, wenn Ladeeinheiten mit Primärspulen in der Fahrbahnfläche eingelassen sind.

Als Problem erweist sich dabei eine flexible Anpassung der wirksamen und effektiven Größe der Primärspule. So kann es wünschenswert sein, eine große Querschnittsfläche der Primärspule zu erreichen mit einer entsprechend gleichgroßen Querschnittsfläche der Sekundärspule, um dadurch eine hohe Leistungsübertragung zu ermöglichen. Ebenso ist es vorteilhaft, eine möglichst große Querschnittsfläche der Primärspule zu erreichen, wenn die Querschnittsfläche der Sekundärspule deutlich kleiner ist, um auf diesem Weg die Positionierung zu erleichtern. Beispielsweise kann Rangieraufwand vermieden werden, wenn ein Flurförderzeug oder Elektrofahrzeug über einer Ladeeinheit mit einer in der Fahrbahnfläche angeordneten Primärspule abgestellt wird, solange die gesamte Querschnittsfläche der im Bodenbereich des Flurförderzeugs angeordneten Sekundärspule aufgrund der großen Querschnittsfläche der Primärspule überdeckt wird. Wenn ein Aufladen während einer Fahrt stattfinden soll, muss ein Fahrweg als Ladestation mit einer Primärspule überdeckt werden. Hier ist es wünschenswert, dass diese nicht die ganze Zeit aktiviert sein muss und daher anzustreben, die Primärspule in mehrere aufeinanderfolgende aufzuteilen. Dabei muss in Fahrtrichtung jeweils die nächste Primärspule aktiviert werden.

Zur flexiblen Anpassung einer Ladestation und der Größe und Form der Primärspule ist es bekannt, Module einzusetzen, aus denen eine Gesamtfläche aus Primärspulen der Module zusammen gesetzt wird. Dies wird beispielsweise offenbart in der DE 10 2013 015 424 A1 für im Boden angeordnete Primärspulen.

Aus der US 2012/0119575 A1 ist eine gattungsgemäße induktive Ladevorrichtung für ein Flurförderzeug bekannt.

Die US 2009/0045773 A1 offenbart in der Figur 3C eine induktive Ladevorrichtung für die Batterie eines Fahrzeugs mit mehreren in einer Straße eingebauten Modulen, die als Fahrwegmodul betrieben werden können. Die Module in der Straße kommunizieren mit einem mit einem Modul versehenen Fahrzeug über Sensoren oder Kommunikationsvorrichtungen miteinander, um die Module in der Straße anzuschalten bzw. abzuschalten, wenn ein Fahrzeug in Koppeldistanz ist.

Die US 2015/0298559 A1 offenbar in der Figur 4 eine induktive Ladevorrichtung für die Batterie eines Fahrzeugs mit mehreren in einer Straße eingebauten Modulen, die als Fahrwegmodul betrieben werden können. Die Module in der Straße haben jeweils einen zugeordneten Schalter und werden von einer übergeordneten Steuereinrichtung in Abhängigkeit von der aktuellen Position des Fahrzeugs aktiviert. Die übergeordnete Steuereinrichtung kommuniziert hierzu mit dem Fahrzeug oder ermittelt über Sensoren an den Modulen die Position des Fahrzeugs.

Der vorliegenden Erfindung liegt die Aufgabe zugrunde, eine Batterieladevorrichtung zur Verfügung zu stellen, bei der eine flexible Anpassung der Querschnittsfläche einer Primärspule durch die Verwendung von Modulen mit Spulen erfolgt und die oben genannten Nachteile vermieden werden, und das Verhalten der Ladevorrichtung an den Einsatz angepasst werden kann.

Diese Aufgabe wird durch eine Batterieladevorrichtung für ein Flurförderzeug mit den Merkmalen des unabhängigen Patentanspruchs 1 gelöst. Vorteilhafte Weiterbildungen der Erfindung sind in den Unteransprüchen angegeben.

Die Aufgabe wird erfindungsgemäß dadurch gelöst, dass bei einer Batterieladevorrichtung für das induktive Laden einer Traktionsbatterie eines Flurförderzeugs mit einer Primärspule, die in einer von einem Flurförderzeug überfahrbaren Bodenfläche eingelassen ist, wobei die Primärspule aus einem oder mehreren, nebeneinander angeordneten Modulen mit jeweiligen Modulspulen aufgebaut ist, und die Primärspule elektrische Leistung an eine Sekundärspule des Flurförderzeugs übertragen kann, jedes Modul für den Betrieb in Bezug auf ein festgelegtes benachbartes Modul sowohl auf einen Betrieb als Verbundmodul als auch auf einen Betrieb als Fahrwegmodul eingestellt werden kann, wobei im Betrieb als Verbundmodul die Modulspule mit dem benachbarten Modul synchron betrieben wird und im Betrieb als Fahrwegmodul die Modulspule von dem benachbarten Modul aktiviert wird, wenn dieses ein Flurförderzeug erfasst, oder umgekehrt das benachbarte Modul aktiviert, wenn durch das Modul selbst ein Flurförderzeug erfasst wird. Die Einstellung erfolgt erfindungsgemäß über eine Kabelverbindung, wobei jedes Modul zwei Kabelanschlüsse aufweist und bei einer Verbindung mit einem benachbarten Modul über beide Kabelanschlüsse ein Betrieb als Verbundmodule festgelegt ist während bei einem Betrieb über einen Kabelanschluss ein Betrieb als Fahrwegmodule festgelegt ist.

Es ist durch diese erfindungsgemäße Lösung möglich, nahezu beliebige geometrische Formen für die Batterieladevorrichtung als im Boden eingelassene Primärspule zu bilden. Durch eine "intelligente" Vernetzung kann dabei festgelegt werden, welche Module insgesamt eine größere Fläche bilden, die synchron und zusammenwirkt, um beispielsweise eine größere Leistung auf eine entsprechende Sekundärspule zu übertragen oder aber auch das Positionieren eines Flurförderzeugs an einer Ladestation zu erleichtern. Es ist kein exaktes Ausrichten des Flurförderzeugs erforderlich, solang die Querschnittsfläche der Sekundärspule des Flurförderzeugs von einer Mehrzahl synchron arbeitender Modulspulen von Modulen im Betrieb als Verbundmodul überdeckt wird. Im Betrieb als Fahrwegmodul kann das Modul von dem benachbarten Modul eine Information erhalten, dass sich ein Flurförderzeug annähert. Es kann dann mit einer Verzögerung, aber auch bewusst bereits vorab eine Aktivierung der eigenen Modulspule erfolgen. Durch letzteres werden auftretende Latenzzeiten bei der Bereitstellung der elektrischen Ladeleistung minimiert. Mit denselben Modulen können somit auch Fahrwege gebildet werden, die als Batterieladevorrichtung dienen und mit denen ein Flurförderzeug während der Fahrt wieder aufgeladen werden kann. Dabei ist auch eine Kombination der Betriebsweise denkbar, beispielsweise dass je zwei nebeneinander angeordnete Module im Verbundbetrieb arbeiten und eine Fahrstraße mit einer Breite von zwei Modulen gebildet wird, so dass in der Richtung 90° zu den zwei Modulen die benachbarten wiederum zwei Module jeweils zueinander im Betrieb als Fahrwegmodule stehen.

Das Modul kann quadratische Form haben und an allen vier Seiten je zwei Kabelanschlüsse aufweisen.

Dies ermöglicht eine Festlegung der Betriebsweise beim Verlegen der Module im Boden und ist daher sehr effizient und intuitiv erfassbar durchzuführen.

In einer günstigen Weiterbildung weist das Modul eine Steuerungsvorrichtung mit einem Bussystem auf, über die die Belegung der Kabelanschlüsse erfasst wird.

Die Einstellung kann über einen Schalter an dem Modul erfolgen.

Das Modul kann eine Steuerungsvorrichtung aufweisen und die Einstellung über einen Softwareparameter erfolgen.

In vorteilhafter Ausführung erfasst das Modul im Betrieb als Fahrwegmodul über Sensoren ein Flurförderzeug.

Als Sensor kann die Modulspule selbst dient, wenn durch diese Leistung abgegeben.

Dabei kann beispielsweise durch das Ansteigen der abgegebenen Leistung eventuell auch die Geschwindigkeit des Flurförderzeugs eingeschätzt werden. Bei entsprechender Geometrie des Fahrweges kann aus dem Ansteigen der Leistung geschlossen werden, dass das Flurförderzeug als nächstes über das Modul selbst fahren wird und mit einer entsprechenden Regelung bzw. einer gewünschten Zeitdistanz die eigene Modulspule aktiviert werden.

Es kann durch eine Steuerungsvorrichtung über eine Abfolge von Modulen im Betrieb als Fahrwegmodul eine Fahrtrichtung des Flurförderzeugs erfasst werden.

Eine solche Steuerungsvorrichtung kann in jedem der Module vorhanden sein oder auch nur in einem zentral für mehrere. Diese Steuerungsvorrichtung kann aus der Abfolge der Leistungsabgabe der Module die Fahrtrichtung und eventuell die Fahrgeschwindigkeit des Flurförderzeugs erfassen. Abhängig davon kann die Aktivierung des nächstfolgenden Moduls erfolgen.

Weitere Vorteile und Einzelheiten der Erfindung werden anhand der in den schematischen Figuren dargestellten Ausführungsbeispiele näher erläutert. Hierbei zeigt
- Fig. 1: schematisch eine Batterieladevorrichtung mit einem darüber stehenden erfindungsgemäßen Flurförderzeug,
- Fig. 2a: ein erfindungsgemäßes Modul in einer Draufsicht,
- Fig. 2b: eine Draufsicht auf mehrere erfindungsgemäße, im Betrieb als Fahrwegmodule betriebene Module,
- Fig. 2c: eine Draufsicht auf mehrere erfindungsgemäße, im Betrieb als Verbundmodule betriebene Module,
- Fig. 2d: eine Draufsicht auf mehrere erfindungsgemäße, im Betrieb als Verbundmodule wie auch als Fahrwegmodule betriebene Module,
- Fig. 3: eine Draufsicht auf mehrere erfindungsgemäße Module im Betrieb als Verbundmodule und
- Fig. 4: eine Draufsicht auf mehrere erfindungsgemäße Module im Betrieb als Fahrwegmodule.

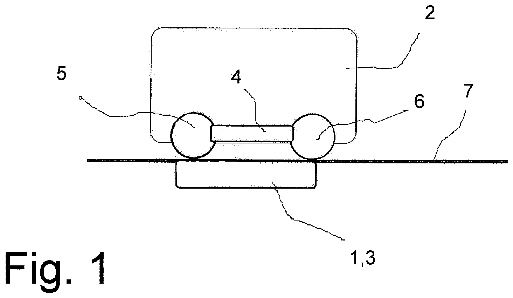

Die Fig. 1 zeigt schematisch eine Batterieladevorrichtung 1 mit einem darüber stehenden erfindungsgemäßen Flurförderzeug 2. Die in eine Fahrbahn 7 eingelassene Batterieladevorrichtung 1 weist eine Primärspule 3 auf, während das Flurförderzeug 2 an der Unterseite angeordnet eine entsprechende Sekundärspule 4 zwischen einer Vorderachse 5 und eine Hinterachse 6 aufweist. Von der Primärspule 3 wird induktiv in die Sekundärspule 4 des Flurförderzeugs 2 elektrische Energie übertragen, um beispielsweise eine Traktionsbatterie des Flurförderzeugs 2 aufzuladen.

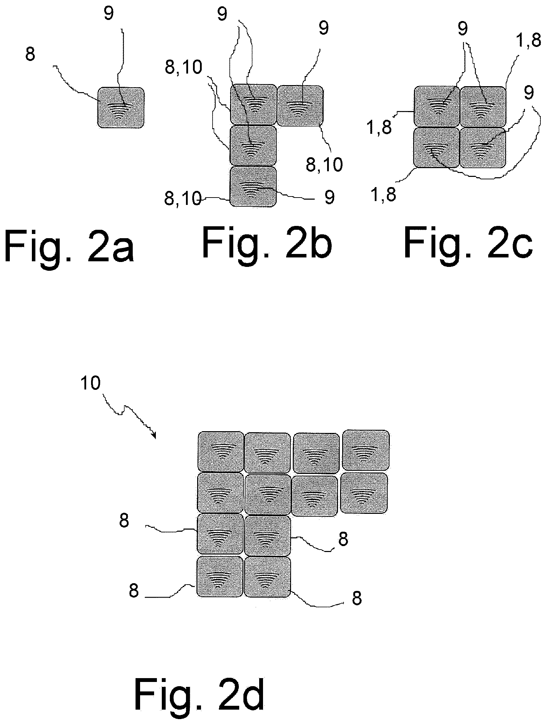

Die Fig. 2a zeigt in Aufsicht ein Modul 8, das eine durch die stilisierten Funkwellen dargestellte Modulspule 9 aufweist.

Die Fig. 2b zeigt in Aufsicht eine Fahrstraße 10 aus mehreren Modulen 8 im Betrieb als Fahrwegmodule, bei denen entlang der nach rechts am oberen Ende abbiegenden Strecke (Fahrstraße 10) die Module 8 nacheinander die Modulspulen 9 zur Leistungsabgabe aktivieren, wenn die Fahrstraße 10 von einem Flurförderzeug 2 befahren wird.

Die Fig. 2c zeigt in Aufsicht mehrere Module 8 im Betrieb als Verbundmodule. Dabei werden die Modulspulen 9 synchron betrieben, um eine größere Fläche für die Primärspule 1 zu erreichen.

Die Fig. 2d zeigt in Aufsicht mehrere Module 8 im Betrieb als Verbundmodule wie auch als Fahrwegmodule. Je zwei Module 8, die nebeneinander angeordnet sind, befinden sich im Betrieb als Verbundmodule. Mit den darüber angeordneten zwei Modulen 8 bzw. entlang der nach rechts abbiegenden Fahrstraße 10 besteht jeweils eine Verbindung für einen Betrieb als Fahrwegmodule. Somit kann ein Flurförderzeug 2 die Breite von zwei Modulen für seine Sekundärspule nutzen während die Fahrstraße 10 befahren wird.

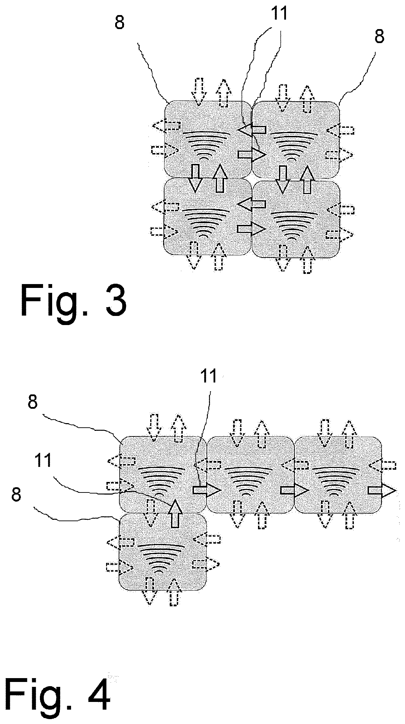

Die Fig. 3 zeigt in Aufsicht Module 8 im Betrieb als Verbundmodule. An allen vier Seiten des jeweiligen Moduls 8 bestehen jeweils zwei Kabelanschlüsse 11, die durch die Pfeile dargestellt sind. In dem vorliegenden Beispiel sind die vier benachbart angeordneten Module 8 mit jedem anliegenden Modul 8 über je beide Kabelanschlüsse 11 verbunden, so dass alle vier Module 8 als Verbundmodule betrieben werden.

Die Fig. 4 zeigt in Aufsicht Module 8 im Betrieb als Fahrwegmodule. Die Module 8 sind mit dem jeweils an dieses anstoßenden Modul 8 nur über einen Kabelanschluss 11 verbunden.

## Patentansprüche

1. Batterieladevorrichtung für das induktive Laden einer Traktionsbatterie eines Flurförderzeugs mit einer Primärspule (1), die in einer von einem Flurförderzeug (2) überfahrbaren Bodenfläche (7) eingelassen ist, wobei die Primärspule (1) aus einem oder mehreren, nebeneinander angeordneten Modulen (8) mit jeweiligen Modulspule n (9) aufgebaut ist, und die Primärspule (1) elektrische Leistung an eine Sekundärspule (4) des Flurförderzeugs (2) übertragen kann, wobei jedes Modul (8) für den Betrieb in Bezug auf ein festgelegtes benachbartes Modul (8) sowohl auf einen Betrieb als Verbundmodul als auch auf einen Betrieb als Fahrwegmodul eingestellt werden kann, wobei im Betrieb als Verbundmodul die Modulspule (9) mit dem benachbarten Modul (8) synchron betrieben wird, **dadurch gekennzeichnet, dass** im Betrieb als Fahrwegmodul die Modulspule (9) von dem benachbarten Modul (8) aktiviert wird, wenn dieses ein Flurförderzeug (2) erfasst, oder umgekehrt das benachbarte Modul (8) aktiviert, wenn durch das Modul (8) selbst ein Flurförderzeug (2) erfasst wirdwobei die Einstellung über eine Kabelverbindung erfolgt, wobei jedes Modul (8) zwei Kabelanschlüsse (11) aufweist und bei einer Verbindung mit einem benachbarten Modul (8) über beide Kabelanschlüsse (11) ein Betrieb als Verbundmodule festgelegt ist während bei einem Betrieb über einen Kabelanschluss (11) ein Betrieb als Fahrwegmodule festgelegt ist.

2. Batterieladevorrichtung nach Anspruch 1,
**dadurch gekennzeichnet,**
**dass** das Modul (8) quadratische Form hat und an allen vier Seiten zwei Kabelanschlüsse (11) aufweist.

3. Batterieladevorrichtung nach Anspruch 1 oder 2,
**dadurch gekennzeichnet,**
**dass** das Modul (8) eine Steuerungsvorrichtung mit einem Bussystem aufweist, über die die Belegung der Kabelanschlüsse (11) erfasst wird.

4. Batterieladevorrichtung nach einem der Ansprüche 1 bis 3,
**dadurch gekennzeichnet,**
**dass** die Einstellung über einen Schalter an dem Modul (8) erfolgt.

5. Batterieladevorrichtung nach einem der Ansprüche 1 bis 4,
**dadurch gekennzeichnet,**
**dass** das Modul (8) eine Steuerungsvorrichtung aufweist und die Einstellung über einen Softwareparameter erfolgt.

6. Batterieladevorrichtung nach einem der Ansprüche 1 bis 4,
**dadurch gekennzeichnet,**
**dass** das Modul (8) im Betrieb als Fahrwegmodul über Sensoren ein Flurförderzeug (2) erfasst.

7. Batterieladevorrichtung nach Anspruch 6,
**dadurch gekennzeichnet,**
**dass** als Sensor die Modulspule (9) selbst dient, wenn durch diese Leistung abgegeben wird.

8. Batterieladevorrichtung nach Anspruch 6 oder 7,
**dadurch gekennzeichnet,**
**dass** durch eine Steuerungsvorrichtung über eine Abfolge von Modulen (8) im Betrieb als Fahrwegmodul eine Fahrtrichtung des Flurförderzeugs erfasst wird.

## Claims

1. Battery charging apparatus for inductively charging a traction battery of an industrial truck, having a primary coil (1) which is embedded in a floor area (7) which can be driven over by an industrial truck (2), wherein the primary coil (1) is constructed from one or more modules (8) which are arranged beside one another and have respective module coils (9), and the primary coil (1) can transmit electrical power to a secondary coil (4) of the industrial truck (2), wherein each module (8) can be adjusted for operation with respect to a stipulated adjacent module (8), both for operation as a composite module and for operation as a route module, wherein the module coil (9) is operated in sync with the adjacent module (8) during operation as a composite module,
**characterized in that**, during operation as a route module, the module coil (9) is activated by the adjacent module (8) if the latter captures an industrial truck (2), or conversely activates the adjacent module (8) if an industrial truck (2) is captured by the module (8) itself, wherein the adjustment is effected via a cable connection, wherein each module (8) has two cable terminals (11), and operation as composite modules is stipulated in the case of a connection to an adjacent module (8) via both cable terminals (11), whereas operation as route modules is stipulated during operation via one cable terminal (11).

2. Battery charging apparatus according to Claim 1,
**characterized**
**in that** the module (8) has a square shape and has two cable terminals (11) on all four sides.

3. Battery charging apparatus according to Claim 1 or 2,
**characterized**
**in that** the module (8) has a control apparatus having a bus system, which control apparatus is used to capture the assignment of the cable terminals (11).

4. Battery charging apparatus according to one of Claims 1 to 3,
**characterized**
**in that** the adjustment is effected via a switch on the module (8).

5. Battery charging apparatus according to one of Claims 1 to 4,
**characterized**
**in that** the module (8) has a control apparatus and the adjustment is effected via a software parameter.

6. Battery charging apparatus according to one of Claims 1 to 4,
**characterized**
**in that** the module (8) captures an industrial truck (2) by means of sensors during operation as a route module.

7. Battery charging apparatus according to Claim 6,
**characterized**
**in that** the module coil (9) itself is used as a sensor if power is output by the module coil.

8. Battery charging apparatus according to Claim 6 or 7,
**characterized**
**in that** a control apparatus captures a direction of travel of the industrial truck using a sequence of modules (8) during operation as a route module.

## Revendications

1. Dispositif de charge de batterie destiné à charger par induction une batterie de traction d'un convoyeur au sol, ledit dispositif comprenant une bobine primaire (1) qui est incorporée dans une zone de sol (7) sur laquelle un convoyeur au sol (2) peut être amené, la bobine primaire (1) étant constituée d'un ou de plusieurs modules (8) disposés les uns à côté des autres et comprenant des modules de bobine respectifs (9), et la bobine primaire (1) pouvant transmettre de l'énergie électrique à une bobine secondaire (4) du convoyeur au sol (2), chaque module (8) pouvant être réglé de manière à fonctionner par rapport à un module voisin défini (8) à la fois en fonctionnement comme module composite et en fonctionnement comme module de circulation, la bobine de module (9) fonctionnant, en fonctionnement comme module composite, de manière synchrone avec le module adjacent (8), **caractérisé en ce que,** en fonctionnement comme module de circulation, la bobine de module (9) est activée par le module adjacent (8) lorsque celui-ci détecte un convoyeur au sol (2), ou inversement elle active le module adjacent (8) lorsque le module (8) lui-même détecte un convoyeur au sol (2), le réglage étant effectué par le biais d'une liaison par câble, chaque module (8) comportant deux bornes de câble (11) et le fonctionnement comme modules composites étant défini lors d'une liaison à un module adjacent (8) par le biais des deux bornes de câble (11), tandis que le fonctionnement comme modules de circulation est défini lors d'un fonctionnement par le biais d'une borne de câble (11).

2. Dispositif de charge de batterie selon la revendication 1,
**caractérisé en que**
le module (8) a une forme carrée et comporte deux bornes de câble (11) sur les quatre côtés.

3. Dispositif de charge de batterie selon la revendication 1 ou 2,
**caractérisé en que**
le module (8) comporte un dispositif de commande muni d'un système de bus et permettant de détecter l'occupation des bornes de câble (11).

4. Dispositif de charge de batterie selon l'une des revendications 1 à 3,
**caractérisé en que**
le réglage est effectué par le biais d'un commutateur au niveau du module (8).

5. Dispositif de charge de batterie selon l'une des revendications 1 à 4,
**caractérisé en que**
le module (8) comporte un dispositif de commande et le réglage est effectué par le biais d'un paramètre logiciel.

6. Dispositif de charge de batterie selon l'une des revendications 1 à 4,
**caractérisé en que**
le module (8) détecte, en fonctionnement comme module de circulation, un convoyeur au sol (2) par le biais des capteurs.

7. Dispositif de charge de batterie selon la revendication 6,
**caractérisé en que**
la bobine de module (9) elle-même sert de capteur lorsque la puissance est délivrée par celle-ci.

8. Dispositif de charge de batterie selon la revendication 6 ou 7,
**caractérisé en que**
un dispositif de commande détecte une direction de roulement du convoyeur au sol par le biais d'une succession de modules (8) en fonctionnement comme un module de circulation.
